(19) Europäisches Patentamt
European Patent Office
Office européen des brevets

(11) Veröffentlichungsnummer: **0 673 978 A1**

(12) **EUROPÄISCHE PATENTANMELDUNG**

(21) Anmeldenummer: **95103717.5**

(22) Anmeldetag: **15.03.95**

(51) Int. Cl.$^6$: **C09B 56/00**, C09B 57/04, C09D 7/12, C07D 209/44, C08K 5/3417, C09B 29/01

(30) Priorität: **23.03.94 DE 4409902**

(43) Veröffentlichungstag der Anmeldung: **27.09.95 Patentblatt 95/39**

(84) Benannte Vertragsstaaten: **CH DE FR GB IT LI**

(71) Anmelder: **BASF AKTIENGESELLSCHAFT**
**D-67056 Ludwigshafen (DE)**

(72) Erfinder: **Krapp, Michael, Dr.**
**Ahornweg 4**
**D-67122 Altrip (DE)**
Erfinder: **Henning, Georg, Dr.**
**Thorwaldsenstrasse 3**
**D-67061 Ludwigshafen (DE)**

(54) **Isoindolinazopigmente.**

(57) Isoindolinazopigmente der allgemeinen Formel I

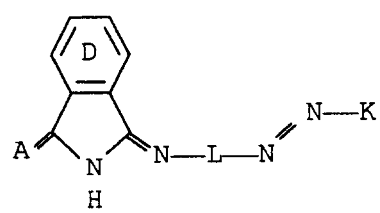

I

mit folgender Bedeutung der Variablen

- A Rest einer methylenaktiven Verbindung oder =S;
- L gegebenenfalls substituiertes 1,4-Phenylen, 1,3-Phenylen oder 1,5-Naphthylen;
- K Rest einer Kupplungskomponente K-H;

Benzolring D gegebenenfalls substituiert,
sowie ihre Herstellung und ihre Verwendung zum Pigmentieren von hochpolymeren organischen Materialien.

EP 0 673 978 A1

Die vorliegende Erfindung betrifft neue Isoindolinazopigmente der allgemeinen Formel I

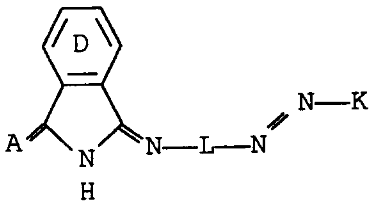 I

in der die Variablen folgende Bedeutung haben:

A einen Rest der Formeln

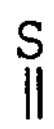, 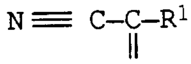, 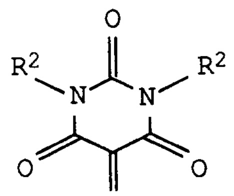, 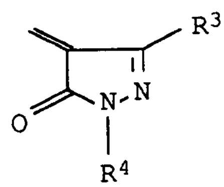,

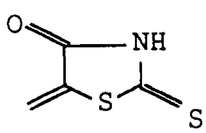, 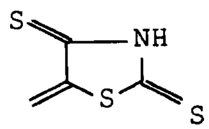, 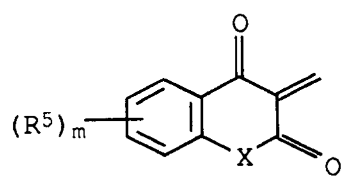,

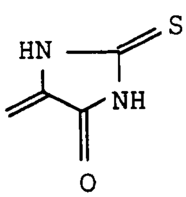, 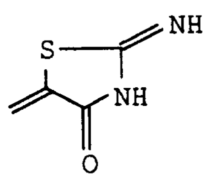, 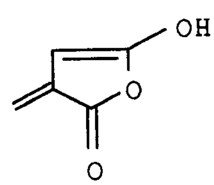,

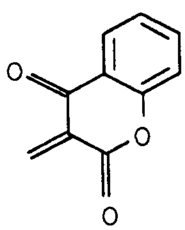, 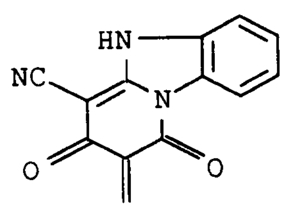, 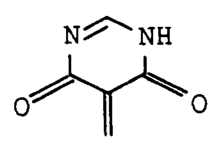,

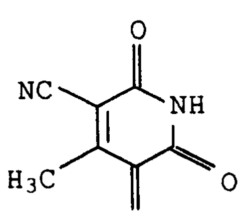 oder 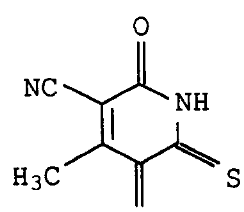

wobei die Variablen folgende Bedeutung haben:

$R^1$ Cyano;

Carbamoyl, das durch

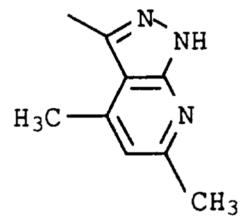

oder 3,3,5,5-Tetramethyl-4-piperidyl, durch $C_1$-$C_{18}$-Alkyl, $C_1$-$C_{10}$-Alkoxycarbonyl, Benzyl, Phenyl oder Naphthyl substituiert sein kann, wobei diese Substituenten ihrerseits durch Halogen, Cyano, Nitro, Sulfo, $C_1$-$C_{10}$-Alkyl, $C_1$-$C_{10}$-Alkoxy, $C_1$-$C_{10}$-Alkylcarbonyl, $C_1$-$C_{10}$-Alkoxycarbonyl, Mono-($C_1$-$C_{10}$-alkyl)amino, Di-($C_1$-$C_{10}$-alkyl)amino, Formylamino, $C_2$-$C_{10}$-Alkanoylamino, Benzoylamino, Aminosulfonyl, Mono- oder Di-($C_1$-$C_{10}$-alkyl)aminosulfonyl, Phenylazo, 3,3,5,5-Tetramethyl-4-piperidyl, Phthalimidyl, Carbamoyl, das ein- oder zweifach durch $C_1$-$C_{10}$-Alkyl substituiert sein kann, und/oder Trifluormethyl substituiert sein können;

$C_1$-$C_{10}$-Alkylcarbonyl, Benzoyl, $C_1$-$C_{10}$-Alkoxycarbonyl, Phenoxycarbonyl oder Benzyloxycarbonyl, wobei Benzoyl, Phenoxy und Benzyloxy durch Halogen, Nitro, Sulfo, $C_1$-$C_{10}$-Alkyl, Formylamino, $C_2$-$C_{10}$-Alkanoylamino und/oder Phthalimidyl substituiert sein können;

Phenyl, das durch Halogen, Cyano, Nitro, Sulfo und/oder Trifluormethyl substituiert sein kann;

Carbazoyl oder Ureidocarbonyl, deren endständige Stickstoffatome ein- oder zweifach durch $C_1$-$C_{10}$-Alkyl oder Benzyl, das die oben genannten Substituenten tragen kann, substituiert sein können;

einen heterocyclischen Rest der Formeln

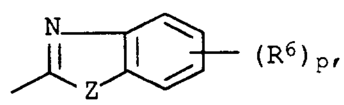

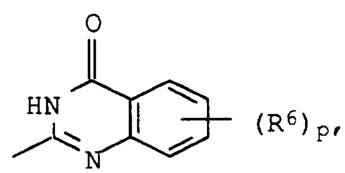

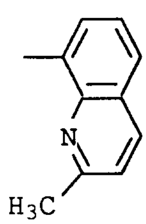

oder

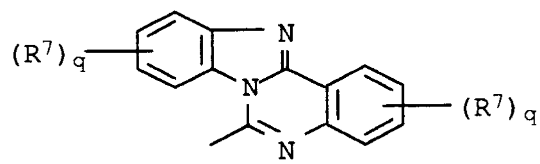

wobei

Z -O-, -S- oder -NH-,

$R^6$ Halogen, Nitro, Sulfo, $C_1$-$C_6$-Alkyl oder $C_1$-$C_6$-Alkoxy,

$R^7$ Halogen,

p 0 bis 2 und

q 1 bis 4

bedeutet;

$R^2$ unabhängig voneinander Wasserstoff, $C_1$-$C_{10}$-Alkyl, Phenyl oder Naphthyl, das jeweils durch Halogen, Nitro, Sulfo, $C_1$-$C_{10}$-Alkyl und/oder $C_1$-$C_{10}$-Alkoxy substituiert sein kann;

$R^3$ $C_1$-$C_{10}$-Alkyl, Amino, Benzoylamino, Carboxy, Carbamoyl oder $C_1$-$C_{10}$-Alkoxycarbonyl;

$R^4$ Wasserstoff oder Phenyl, das bis zu zwei der folgenden Substituenten tragen kann: Halogen, Nitro, Sulfo, Carboxy, Carbamoyl, $C_1$-$C_{10}$-Alkyl, $C_1$-$C_{10}$-Alkoxy oder $C_1$-$C_{10}$-Alkoxycarbonyl;

$R^5$ Halogen oder Nitro;

X -O- oder -$NR^8$-wobei $R^8$ Wasserstoff oder $C_1$-$C_{10}$-Alkyl bedeutet;

m 0 bis 4;

L 1,4-Phenylen, 1,3-Phenylen oder 1,5-Naphthylen, das jeweils folgende Substituenten tragen kann: Halogen, Nitro, Carboxy, Sulfo, Sulfonamido, das ein- oder zweifach durch $C_1$-$C_{10}$-Alkyl

substituiert sein kann, $C_1$-$C_{10}$-Alkyl, $C_1$-$C_{10}$-Alkoxy, $C_1$-$C_{10}$-Alkylcarbonyl, $C_1$-$C_{10}$-Alkoxycarbonyl, Formylamino, $C_2$-$C_{10}$-Alkanoylamino und/oder Carbamoyl, das ein- oder zweifach durch $C_1$-$C_{10}$-Alkyl substituiert sein kann;

K den Rest einer Kupplungskomponente der Formel

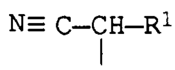 , 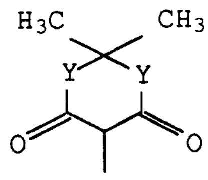 , 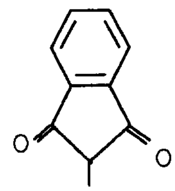 ,

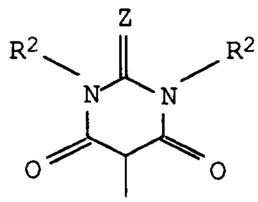 , 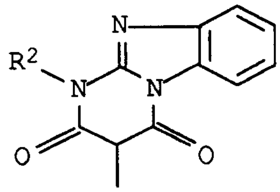 , 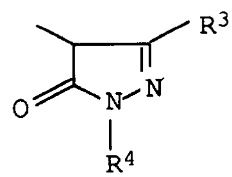 ,

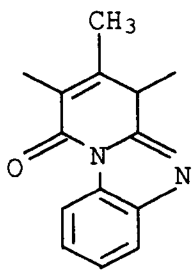 , 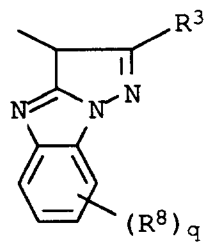 ,

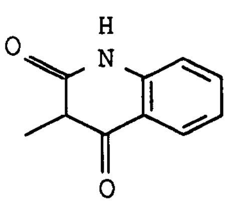 , 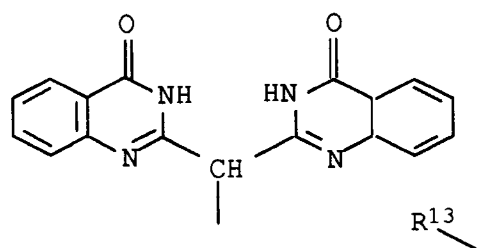 ,

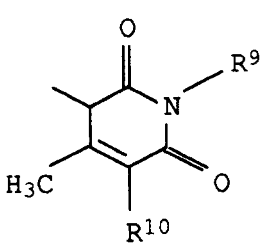 , 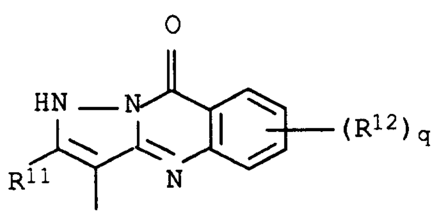 , 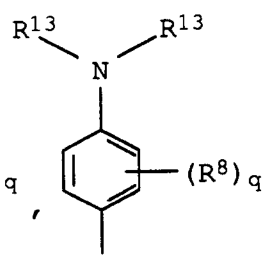 ,

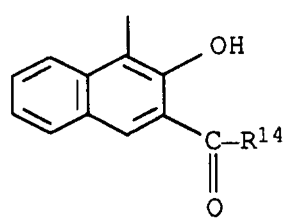 , 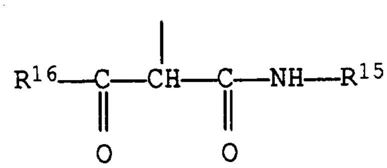 ,

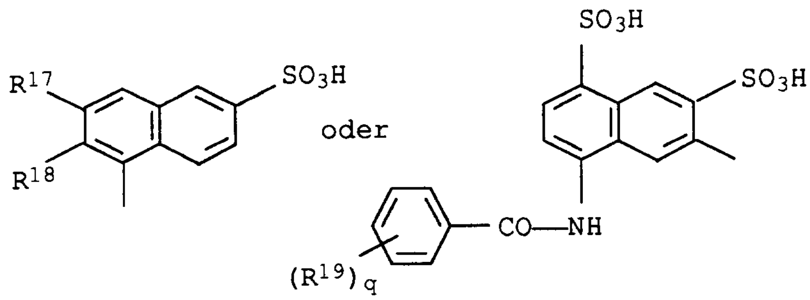

oder

wobei die neuen Variablen folgende Bedeutung haben:

- $R^8$ Wasserstoff, Halogen, Nitro, Sulfo, $C_1$-$C_{10}$-Alkyl, $C_1$-$C_{10}$-Alkoxy, $C_1$-$C_{10}$-Alkoxycarbonyl und/oder Carbamoyl, das ein- oder zweifach durch $C_1$-$C_{10}$-Alkyl substituiert sein kann;
- $R^9$ $C_1$-$C_{10}$-Alkyl, das durch Amino, Mono- oder Di($C_1$-$C_{10}$-alkyl)-amino substituiert sein kann;
- $R^{10}$ Wasserstoff, Halogen, Cyano, Sulfo, $C_1$-$C_{10}$-Alkylcarbonyl, $C_1$-$C_{10}$-Alkoxycarbonyl oder Carbamoyl, das ein- oder zweifach durch $C_1$-$C_{10}$-Alkyl substituiert sein kann;
- $R^{11}$ Methyl oder Phenyl, das folgende Substituenten tragen kann: Halogen, Hydroxy, Nitro, Sulfo, $C_1$-$C_{10}$-Alkyl, $C_1$-$C_{10}$-Alkoxy, $C_1$-$C_{10}$-Alkylcarbonyl, $C_1$-$C_{10}$-Alkoxycarbonyl, Formylamino, $C_2$-$C_{10}$-Alkanoylamino, Carboxy, Carbamoyl, das ein- oder zweifach durch $C_1$-$C_{10}$-Alkyl substituiert sein kann, Mono- oder Di-($C_1$-$C_{10}$-alkyl)- oder -(phenyl)-aminosulfonyl und/oder $C_1$-$C_{10}$-Alkoxy- oder Phenoxysulfonyl;
- $R^{12}$ Wasserstoff, Halogen, Hydroxy, Sulfo, $C_1$-$C_{10}$-Alkyl, $C_1$-$C_{10}$-Alkoxy, $C_1$-$C_{10}$-Alkylcarbonyl, Carbamoyl, das ein- oder zweifach durch $C_1$-$C_{10}$-Alkyl substituiert sein kann, und/oder Mono-($C_1$-$C_{10}$-alkyl)- oder -(phenyl)-aminosulfonyl;
- $R^{13}$ gleiche oder verschiedene Reste: Wasserstoff, $C_1$-$C_{10}$-Alkyl oder $C_1$-$C_{10}$-Alkylcarbonyl;
- $R^{14}$ Hydroxy oder einen Rest der Formel

  $-NH-R^{20}$

  wobei $R^{20}$ Wasserstoff, Phenyl, das die bei dem Rest $R^{10}$ für Phenyl genannten Substituenten tragen kann, oder einen heterocyclischen Rest der Formeln

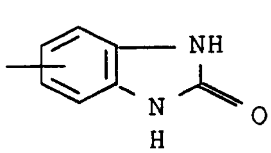 , 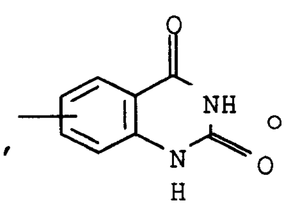 oder 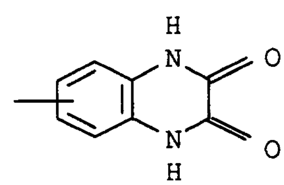

  bedeutet;
- $R^{15}$ Phenyl oder Naphthyl, das jeweils die bei dem Rest $R^{10}$ für Phenyl genannten Substituenten tragen kann, oder einen der bei dem Rest $R^{14}$ genannten heterocyclischen Reste $R^{20}$;
- $R^{16}$ Methyl oder einen Rest der Formel $-NH-R^{15}$;
- $R^{17}$ Wasserstoff oder Sulfo;
- $R^{18}$ Wasserstoff oder Hydroxy;
- $R^{19}$ Halogen;
- Y -O- oder $-CH_2-$;
- Z =O oder =S;

der Benzolring D durch Halogen, Nitro, Carboxy, Carbamoyl, $C_1$-$C_{10}$-Alkyl und/oder $C_1$-$C_{10}$-Alkoxy substituiert sein kann;

wobei die Pigmente in der Azo- oder der Hydrazoform oder in Form eines Gleichgewichtsgemisches zwischen diesen Formen vorliegen können und die enthaltenen verlackbaren Gruppen verlackt sein können.

Die neuen Isoindolinazopigmente können je nach Art der Kupplungskomponente in der Azo- oder der Hydrazoform oder in Form eines Gleichgewichtsgemisches vorliegen.

Außerdem betrifft die Erfindung die Herstellung dieser Pigmente sowie ihre Verwendung zum Pigmentieren von hochmolekularen organischen Materialien.

Isoindoline stellen eine interessante Pigmentklasse für den gelben bis roten sowie braunen bis schwarzen Farbtonbereich dar.

Azopigmente auf der Basis von Isoindolinen wurden noch nicht beschrieben. Es sind lediglich Azopigmente auf der Basis von Isoindolinonen (DE-A-29 01 121 und EP-A-22 076) bekannt.

Der Erfindung lag die Aufgabe zugrunde, neue Azopigmente auf der Basis von Isoindolin mit vorteilhaften Anwendungseigenschaften bereitzustellen und auf diese Weise eine vergrößerte Variationsbreite hinsichtlich des gewünschten Farbtons und der gewünschten Anwendungseigenschaften zu ermöglichen.

Demgemäß wurden die Isoindolinazopigmente der eingangs definierten Formel I gefunden.

Weiterhin wurde ein Verfahren zur Herstellung der Isoindolinazopigmente I gefunden, welches dadurch gekennzeichnet ist, daß man ein Halbkondensat der Formel II

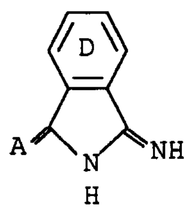

II

mit einem aromatischen Diamin der Formel III

$H_2N—L—NH_2$ III

in einem unter den Reaktionsbedingungen inerten organischen Lösungsmittel umsetzt und das erhaltene Amin der Formel IV

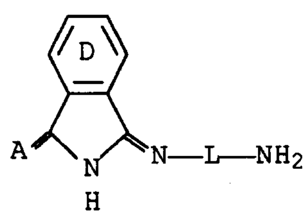

IV

diazotiert und mit einer Kupplungskomponente K-H (V) kuppelt.

Nicht zuletzt wurde die Verwendung der Isoindolinazopigmente I zum Pigmentieren von hochpolymeren organischen Materialien gefunden.

Der Benzolring D kann bis zu 4 der folgenden Substituenten tragen: Halogen, Nitro, Carboxy, Carbamoyl, $C_1$-$C_6$-Alkyl und/oder $C_1$-$C_6$-Alkoxy. Vorzugsweise ist er jedoch unsubstituiert.

Geeignete Reste A entsprechen neben Schwefel vor allem den folgenden Resten methylenaktiver Verbindungen mit den Formeln (AI) bis (AXI):

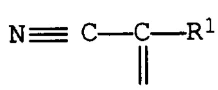

(AI)

wobei $R^1$ folgende Bedeutung hat:

Cyano;

Carbamoyl, das durch 3,3,5,5-Tetramethyl-4-piperidyl oder

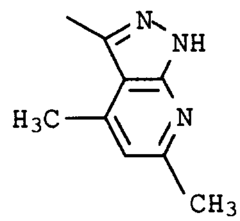

durch $C_1$-$C_{18}$-Alkyl, $C_1$-$C_{10}$-Alkoxycarbonyl, Benzyl, Phenyl oder Naphthyl substituiert sein kann, wobei diese Substituenten ihrerseits durch Halogen, Cyano, Nitro, Sulfo, $C_1$-$C_{10}$-Alkyl, $C_1$-$C_{10}$-Alkoxy, $C_1$-$C_{10}$-Alkylcarbonyl, Formylamino, $C_2$-$C_{10}$-Alkanoylamino, $C_1$-$C_{10}$-Alkoxycarbonyl, insbesondere Acetyl, Mono- oder Di($C_1$-$C_{10}$-alkyl)amino, Benzoylamino, Aminosulfonyl, Mono- oder Di-($C_1$-$C_{10}$-alkyl)aminosulfonyl, Phenylazo, 3,3,5,5-Tetramethyl-4-piperidyl, Phthalimidyl, Carbamoyl, das ein- oder zweifach durch $C_1$-$C_{10}$-Alkyl substituiert sein kann, und/oder Trifluormethyl substituiert sein können;

$C_1$-$C_{10}$-Alkylcarbonyl, Benzoyl, $C_1$-$C_{10}$-Alkoxycarbonyl, Phenoxycarbonyl oder Benzyloxycarbonyl, wobei Benzoyl, Phenoxy und Benzyloxy durch Halogen, Nitro, Sulfo, $C_1$-$C_{10}$-Alkyl, Formylamino, $C_2$-$C_{10}$-Alkanoylamino und/oder Phthalimidyl substituiert sein können;

Phenyl, das durch Halogen, Cyano, Nitro, Sulfo und/oder Trifluormethyl substituiert sein kann;

Carbazoyl oder Ureidocarbonyl, deren endständige Stickstoffatome ein- oder zweifach durch $C_1$-$C_{10}$-Alkyl oder Benzyl, das die obengenannten Substituenten tragen kann, substituiert sein können;

einen heterocyclischen Rest der Formeln

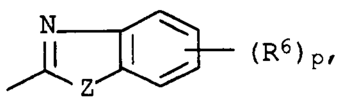

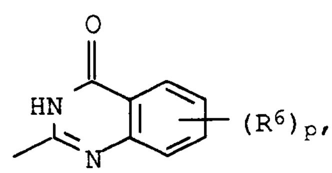

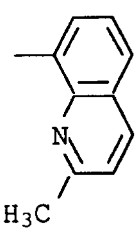

oder

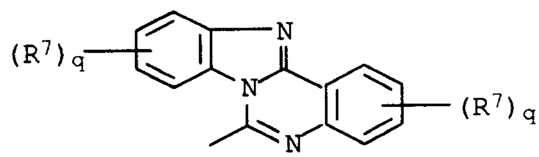

wobei

| | |
|---|---|
| Z | -O-, -S- oder -NH-, |
| $R^6$ | Halogen, Nitro, Sulfo, $C_1$-$C_6$-Alkyl oder $C_1$-$C_6$-Alkoxy, |
| $R^7$ | Halogen, |
| p | 0 bis 2 und |
| q | 1 bis 4 bedeutet; |

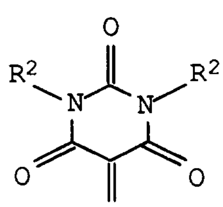

(AII)

wobei die Reste $R^2$ unabhängig voneinander Wasserstoff, $C_1$-$C_6$-Alkyl, Phenyl oder Naphthyl, das jeweils

durch Halogen, Nitro, Sulfo, $C_1$-$C_{10}$-Alkyl und/oder $C_1$-$C_{10}$-Alkoxy substituiert sein kann, bedeuten;

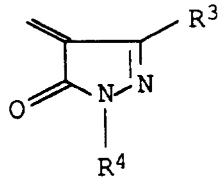

(AIII)

wobei die Variablen folgende Bedeutung haben:

$R^3$ $C_1$-$C_{10}$-Alkyl, insbesondere Methyl, Amino, Benzoylamino, Carboxy, Carbamoyl oder $C_1$-$C_{10}$-Alkoxycarbonyl;

$R^4$ Wasserstoff oder Phenyl, das bis zu zwei der folgenden Substituenten tragen kann: Halogen, insbesondere Chlor, Nitro, Sulfo, Carboxy, Carbamoyl, $C_1$-$C_{10}$-Alkyl, $C_1$-$C_{10}$-Alkoxy oder $C_1$-$C_{10}$-Alkoxycarbonyl;

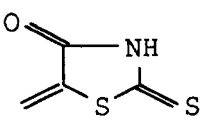

oder

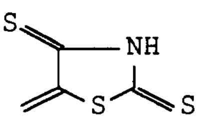

(AIVa,b)

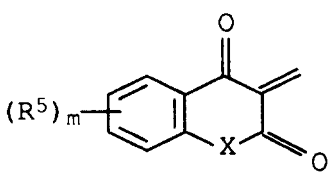

(AV)

wobei die Variablen folgende Bedeutung haben:

X -O- oder -$NR^8$-

wobei $R^8$ Wasserstoff oder $C_1$-$C_{10}$-Alkyl, insbesondere Methyl, bedeutet;

$R^5$ Halogen, insbesondere Chlor, oder Nitro;

m 0 bis 4;

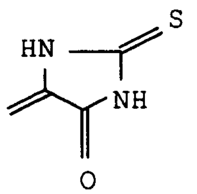 oder 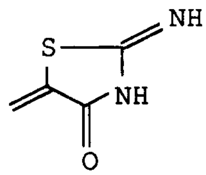 , (AVIa,b)

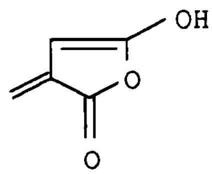 , 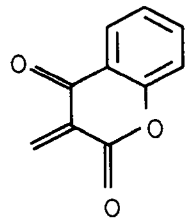 , (AVII) , (AVIII)

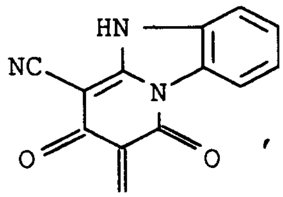 , 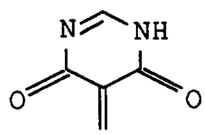 (AIX), (AX)

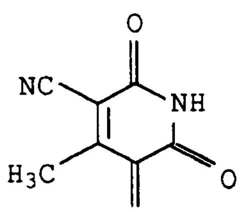 , 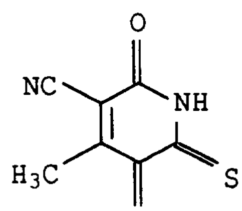 (AXIa,b)

Dabei sind die Reste A der Formel (AI) als bevorzugt hervorzuheben.

Als Brückenglieder L sind neben 1,5-Naphthylen besonders 1,3-Phenylen und ganz besonders 1,4-Phenylen zu nennen.

Die Benzol- und Naphthalinringe können dabei bis zu zwei gleiche oder verschiedene der folgenden Substituenten tragen: Halogen, Nitro, Carboxy, Sulfo, Sulfonamido, das ein- oder zweifach durch $C_1$-$C_{10}$-Alkylcarbonyl substituiert sein kann, $C_1$-$C_{10}$-Alkyl, $C_1$-$C_{10}$-Alkoxy, $C_1$-$C_{10}$-Alkylcarbonyl, $C_1$-$C_{10}$-Alkoxycarbonyl, Formylamino, $C_2$-$C_{10}$-Alkanoylamino oder Carbamoyl, das ein- oder zweifach durch $C_1$-$C_{10}$-Alkyl substituiert sein kann.

Bevorzugt sind hierbei die Substituenten Chlor, Brom, Methyl, Methoxy, Sulfo, Sulfonamido und Carbamoyl.

Vorzugsweise sind die aromatischen Ringe jedoch unsubstituiert.

Geeignete Reste K der Kupplungskomponenten K-H (V) entsprechen den Formeln (KI) bis (KXVIII):

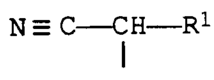 (KI)

wobei $R^1$ die obengenannte Bedeutung hat;

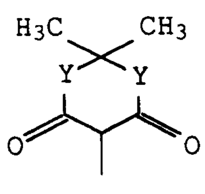 (KII)

wobei Y -O- oder $-CH_2-$ bedeutet;

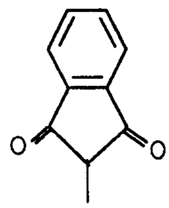

(KIII)

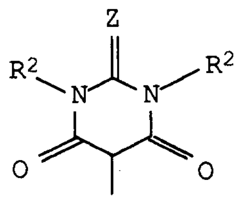

,

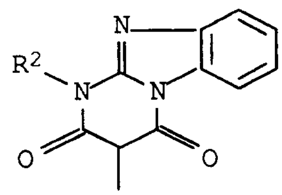

(KIV), (KV)

wobei Z für =O oder =S steht und $R^2$ die obengenannte Bedeutung hat;

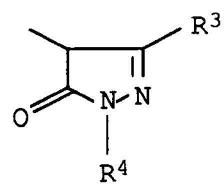

(KVI)

wobei $R^3$ und $R^4$ die obengenannte Bedeutung haben;

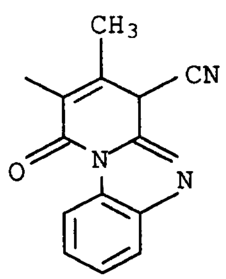

,

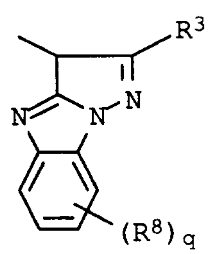

(KVII), (KVIII)

wobei $R^3$ die obengenannte Bedeutung hat, q für 1 bis 4 steht und

$R^8$ Wasserstoff, Halogen, Nitro, Sulfo, $C_1$-$C_{10}$-Alkyl, $C_1$-$C_{10}$-Alkoxy, $C_1$-$C_{10}$-Alkoxycarbonyl und/oder Carbamoyl, das ein- oder zweifach durch $C_1$-$C_{10}$-Alkyl substituiert sein kann, bedeutet;

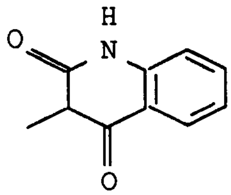 , 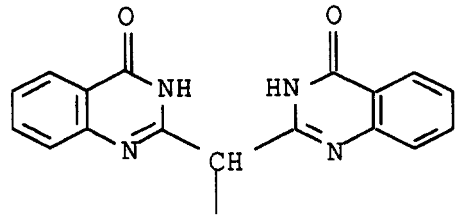 (KIX) , (KX)

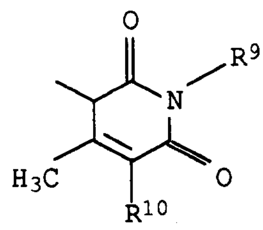 (KXI)

wobei die Variablen folgende Bedeutung haben:

- $R^9$ $C_1$-$C_{10}$-Alkyl, das durch Amino, Mono- oder Di-($C_1$-$C_{10}$-alkyl)amino substituiert sein kann;
- $R^{10}$ Wasserstoff, Halogen, Cyano, Sulfo, $C_1$-$C_{10}$-Alkylcarbonyl, $C_1$-$C_{10}$-Alkoxycarbonyl oder Carbamoyl, das ein- oder zweifach durch $C_1$-$C_{10}$-Alkyl substituiert sein kann;

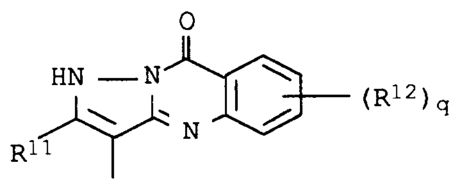 (KXII)

wobei die Variablen folgende Bedeutung haben:

- $R^{11}$ Methyl oder Phenyl, das folgende Substituenten tragen kann: Halogen, Hydroxy, Nitro, Sulfo, $C_1$-$C_{10}$-Alkyl, $C_1$-$C_{10}$-Alkoxy, $C_1$-$C_{10}$-Alkoxycarbonyl, Formylamino, $C_2$-$C_{10}$-Alkanoylamino, Carbamoyl, das ein- oder zweifach durch $C_1$-$C_{10}$-Alkyl substituiert sein kann, Mono- oder Di-($C_1$-$C_{10}$-alkyl)- oder -(phenyl)-aminosulfonyl und/oder $C_1$-$C_{10}$-Alkoxy- oder Phenoxysulfonyl;
- $R^{12}$ Wasserstoff, Halogen, Hydroxy, Sulfo, $C_1$-$C_{10}$-Alkyl, $C_1$-$C_{10}$-Alkoxy, $C_1$-$C_{10}$-Alkylcarbonyl, Carbamoyl, das ein- oder zweifach durch $C_1$-$C_{10}$-Alkyl substituiert sein kann, und/oder Mono-($C_1$-$C_{10}$-alkyl)- oder -(phenyl)-aminosulfonyl;

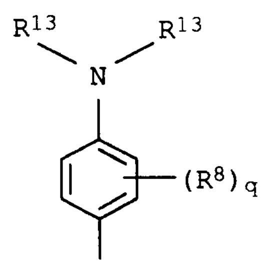 (KXIII)

wobei $R^8$ die oben genannte Bedeutung und

- $R^{13}$ gleiche oder verschiedene der Reste Wasserstoff, $C_1$-$C_{10}$-Alkyl oder $C_1$-$C_{10}$-Alkylcarbonyl bedeutet;

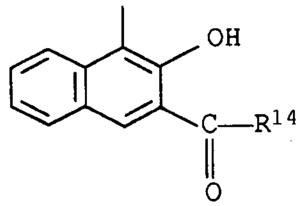

(KXIV)

wobei

$R^{14}$ Hydroxy oder einen Rest der Formel

-NH-$R^{20}$

bedeutet, in der $R^{20}$ für Wasserstoff, Phenyl, das die bei $R^{10}$ für Phenyl genannten Substituenten tragen kann, oder einen heterocyclischen Rest der Formeln

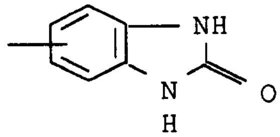

,

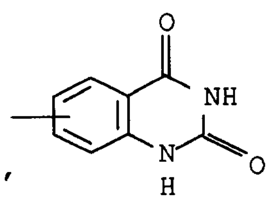

oder

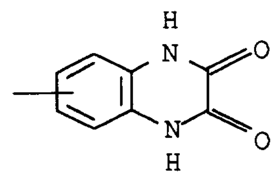

steht;

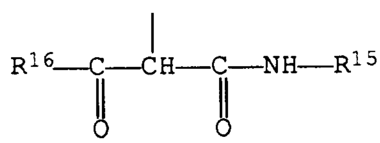

(KXV)

wobei die Variablen folgende Bedeutung haben:

$R^{15}$ Phenyl oder Naphthyl, das jeweils die bei $R^{10}$ für Phenyl genannten Substituenten tragen kann, oder einen der bei $R^{14}$ genannten heterocyclischen Reste $R^{20}$;

$R^{16}$ Methyl oder einen Rest der Formel -NH-$R^{15}$;

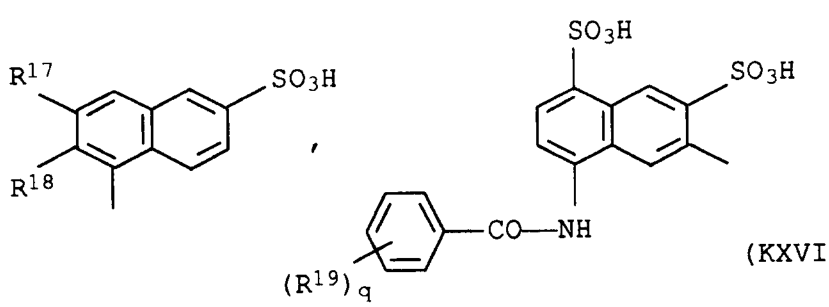

,

(KXVI), (KXVII)

wobei die Variablen folgende Bedeutung haben:

$R^{17}$ Wasserstoff oder Sulfo;

$R^{18}$ Wasserstoff oder Hydroxy;

$R^{19}$ Halogen.

Dabei sind als Reste bevorzugter Kupplungskomponenten die Reste der Formeln (KIV) und (KVI) hervorzuheben.

Von den vorstehend aufgeführten Resten seien beispielhaft genannt:

- $C_1$-$C_{18}$-Alkyl, bevorzugt $C_1$-$C_{10}$-Alkyl, besonders bevorzugt $C_1$-$C_6$-Alkyl, wie Methyl, Ethyl, Propyl, Isopropyl, Butyl, Isobutyl, sec.-Butyl, tert.-Butyl, Pentyl, Isopentyl, Neopentyl, tert.-Pentyl, Hexyl und 2-Methylpentyl, insbesondere Methyl und Ethyl;
- $C_1$-$C_{10}$-Alkoxy, bevorzugt $C_1$-$C_6$-Alkoxy, wie Methoxy, Ethoxy, Propoxy, Isopropoxy, Butoxy, Isobutoxy, sec.-Butoxy, tert.-Butoxy, Pentyloxy und Hexyloxy, insbesondere Methoxy und Ethoxy;
- $C_1$-$C_{10}$-Alkylcarbonyl, bevorzugt $C_1$-$C_6$-Alkylcarbonyl, wie Acetyl, Propionyl, insbesondere Acetyl;
- $C_1$-$C_{10}$-Alkoxycarbonyl, bevorzugt $C_1$-$C_6$-Alkoxycarbonyl, wie insbesondere Methoxycarbonyl und Ethoxycarbonyl;
- Mono- und Di-($C_1$-$C_{10}$-alkyl)-, bevorzugt -($C_1$-$C_6$-alkyl)amino, wie Methylamino, Ethylamino, Propylamino, Isopropylamino, Butylamino, Pentylamino und Hexylamino, insbesondere Methylamino und Ethylamino; Cycloalkylamino wie Cyclopropyl-, Cyclobutyl-, Cyclopentyl- und Cyclohexylamino; Dimethylamino, Diethylamino, Dipropylamino, Diisopropylamino und Methylethylamino;
- $C_2$-$C_{10}$-Alkanoylamino, bevorzugt $C_2$-$C_7$-Alkanoylamino: insbesondere Acetylamino;
- Mono- und Di-($C_1$-$C_{10}$-alkyl)-, bevorzugt -($C_1$-$C_6$-alkyl)aminosulfonyl: Methyl- und Ethylaminosulfonyl;
- $C_1$-$C_{10}$-Alkoxysulfonyl, bevorzugt $C_1$-$C_6$-Alkoxysulfonyl: Methoxy- und Ethoxysulfonyl;
- Halogen: insbesondere Chlor und Brom.

Enthalten die Isoindolinazopigmente I verlackbare Gruppen wie Carboxy oder Sulfo, so können diese auch in verlackter Form, d.h. als Metallsalze vorliegen.

Geeignete Metalle sind dabei z.B. Lithium, Natrium, Kalium, Strontium, Barium, Aluminium, Kupfer, Eisen, Cobalt, Nickel und besonders Magnesium, Calcium, Zink und Mangan.

Beim erfindungsgemäßen Verfahren zur Herstellung der Isoindolinazopigmente I wird zunächst ein Halbkondensat II mit einem aromatischen Diamin III in einem unter den Reaktionsbedingungen inerten organischen Lösungsmittel zu einem Amin der Formel IV

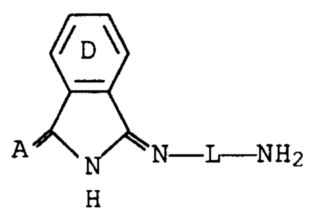

IV

umgesetzt, das anschließend dann in üblicher Weise diazotiert und mit einer Kupplungskomponente K-H (V) gekuppelt wird, wobei überraschend ist, daß das Amin IV im sauren Medium so stabil ist, daß es diazotiert werden kann.

Als inerte organische Lösungsmittel für die Herstellung des Amins IV sind, wie in der älteren deutschen Patentanmeldung P 43 41 769.8 beschrieben, polare protische Lösungsmittel wie ein- oder mehrwertige aromatische Alkohole und aliphatische Alkohole, Etheralkohole, offenkettige und cyclische Ether, dipolaraprotische Lösungsmittel und aromatische Lösungsmittel wie Nitrobenzol, Toluol und Chlorbenzol geeignet.

Im einzelnen seien z.B. genannt: Phenol, $C_1$-$C_6$-Alkohole, bevorzugt $C_1$-$C_4$-Alkanole wie Ethanol, Propanol, Isopropanol, Butanol und vor allem Methanol; Ethylenglykolmono- und -di-($C_1$-$C_6$)alkylether wie Ethylenglykolmono- und -dimethylether, Oligo- und Polyglykole und -glykolether wie Diethylenglykolmonomethylether, Dioxan und Tetrahydrofuran; Dimethylsulfoxid und amidische Lösungsmittel wie Dimethylformamid, Dimethylacetamid und N-Methylpyrrolidon. Geeignet sind auch Mischungen dieser Lösungsmittel, z.B. Dimethylacetamid/Alkanol, Phenol/Alkanol.

Die Menge Lösungsmittel ist an sich nicht kritisch und beträgt in der Regel 5 bis 100 g, vorzugsweise 10 bis 50 g je g II.

Halbkondensat II und Diamin III werden zweckmäßigerweise in etwa äquimolarem Verhältnis eingesetzt.

Die Halbkondensate II sind an sich bekannt oder können in bekannter Weise durch Umsetzung der entsprechenden Iminoaminoisoindolenine, Trichlorisoindolenine und entsprechend aktivierter Derivate oder direkt aus den entsprechenden o-Phthalodinitrilen mit methylenaktiven (C-H-aciden) Verbindungen hergestellt werden.

In der Regel wird die Umsetzung von II mit III bei 0 bis 100°C, insbesondere bei 30 bis 80°C vorgenommen. Die zu wählende Temperatur hängt dabei auch von der Rückflußtemperatur des verwendeten Lösungsmittels ab.

Üblicherweise arbeitet man bei Normaldruck. Man kann die Umsetzung jedoch auch unter Druck durchführen.

Gängige Reaktionszeiten sind etwa 10 min bis 5 h, wobei die Reaktion meist schon nach der Aufheizphase beendet ist.

Verfahrenstechnisch geht man im allgemeinen so vor, daß man ein gewünschtenfalls erwärmtes Gemisch aus Lösungsmittel und Halbkondensat II vorlegt und das aromatische Diamin III zugibt. Die Zugabe kann dabei kontinuierlich erfolgen.

Das Amin IV wird dann zweckmäßigerweise isoliert und wie allgemein üblich diazotiert und mit der Kupplungskomponente V gekuppelt.

Als Lösungsmittel eignen sich für die Diazotierung insbesondere dipolar-aprotische Lösungsmittel wie N-Methylpyrrolidon, Dimethylformamid und Dimethylacetamid sowie Wasser und auch Mischungen dieser Lösungsmittel.

Die Diazotierung wird in Gegenwart einer organischen Säure wie Essigsäure (Eisessig) und Propionsäure oder einer anorganischen Säure wie Salzsäure, Schwefelsäure, Salpetersäure und Phosphorsäure durchgeführt.

Geeignete Diazotierungsmittel sind die üblicherweise für diesen Zweck eingesetzten Verbindungen wie Alkalimetallnitrite, insbesondere Natriumnitrit, organische Nitrite, insbesondere Glykolnitrit und Isoamylnitrit, und Nitrosylschwefelsäure.

Die Konzentration des Reaktionsgemisches wird durch dessen Rührfähigkeit bestimmt.

Die Reaktionstemperatur hängt von der Reaktivität und Stabilität der Reaktionspartner und ihrer Löslichkeit ab und beträgt im allgemeinen -20 bis 50°C, bevorzugt 0 bis 5°C.

Nach abgeschlossener Diazotierung, die wenige Minuten bis einige Stunden dauern kann, wird der für die Kupplung erforderliche pH-Wert (in der Regel ein pH-Wert von 4 bis 6) durch Zugabe einer Base wie Natronlauge eingestellt und die Kupplungskomponente, zweckmäßigerweise in einem der oben genannten Lösungsmittel, einem Alkohol oder einem Gemisch dieser Lösungsmittel, gegebenenfalls durch Basenzusatz (z.B. Natronlauge), gelöst, zugegeben.

Die Aufarbeitung des Reaktionsgemisches auf die Isoindolinazopigmente I kann in üblicher Weise vorgenommen werden, indem man die Pigmente nach dem Abkühlen der Mischung abfiltriert, gegebenenfalls mit einem inerten Lösungsmittel wie Dimethylformamid, Dimethylacetamid oder N-Methylpyrrolidon oder Eisessig, Alkoholen und/oder Wasser wäscht und trocknet.

Je nach den Anforderungen für die Anwendung kann man die Pigmente direkt in der anfallenden Form verwenden oder wird man erst eine übliche Mahlung und/oder eine übliche Lösungsmittelbehandlung gegebenenfalls in Gegenwart die Kristallisation beeinflussender Additive vornehmen. Selbstverständlich kann die Kristallisationssteuerung auch bereits bei der Synthese durch an sich bekannte Maßnahmen wie den Zusatz kristallisationshemmender Additive, die Einwirkung von Scherkräften während der Umsetzung sowie den Zusatz von Mahlkörpern und/oder gezielte Temperaturführung erfolgen.

Mit Hilfe des erfindungsgemäßen Verfahrens können die Isoindolinazopigmente gezielt in guter Ausbeute und Reinheit hergestellt werden.

Die so erhältlichen Isoindolinazopigmente I können vorteilhaft zum Färben von hochmolekularen organischen Materialien verwendet werden. Insbesondere seien die Herstellung von Druckfarben und Lacken sowie die Pigmentierung von Kunststoffen genannt.

Beispiele für zu färbende Materialien sind: natürliche Harze; Kunstharze (Polymerisations- und Kondensationsharze) wie Alkydharze, Acrylharze, Epoxidharze, Aminoformaldehydharze wie Melamin- und Harnstoffharze; Celluloseether und -ester wie Ethylcellulose, Nitrocellulose, Celluloseacetat und -butyrat; Polyurethane; Polyvinylchloride; Kautschuk, Chlorkautschuk; Polyolefine; Polyamide; Polyester; Epoxyester; Polycarbonate; Phenoplaste; Gummi; Casein; Silikon und Silikonharze sowie auch Mischungen der genannten Materialien.

Die hochmolekularen organischen Materialien können beim Färben als plastische Massen, Schmelzen, Lösungen, Emulsionen oder Dispersionen vorliegen. Bei der Lack- und Druckfarbenherstellung verwendet man bevorzugt Lösungen oder Dispersionen. Als Beispiele für bevorzugte Lacksysteme seien Alkyd/Melaminharzlacke, Acryl/Melaminharzlacke, Celluloseacetat/Cellulosebutyratlacke und Zweikomponentenlacke auf Basis mit Polyisocyanat vernetzbarer Acrylharze genannt.

Beispiele

Herstellung von Isoinolinazopigmenten der Formel

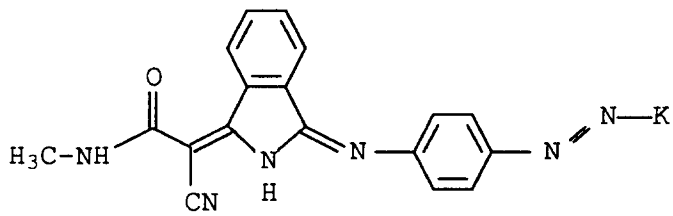

Beispiel 1

(K: 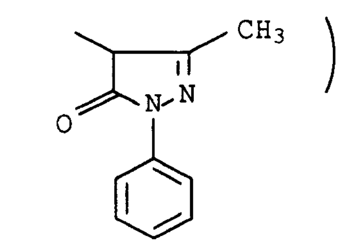 )

a) Herstellung der Diazokomponente IV

Zu einer Suspension von 22,6 g des Halbkondensats

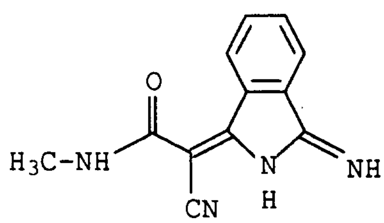

in 300 ml Methanol wurden bei Raumtemperatur 10,8 g p-Phenylendiamin, gelöst in 100 ml Methanol, zugetropft. Die Reaktionsmischung wurde dann 1h unter Rückfluß gerührt.

Anschließend wurde das Lösungsmittel zur Hälfte abdestilliert und der Niederschlag durch Filtrieren isoliert, mit Methanol und Wasser gewaschen und getrocknet.

Es wurden 28,7 g der Verbindung

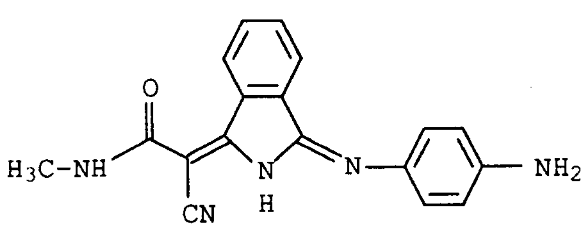

als rotes Pulver mit dem Schmelzpunkt 285 °C erhalten, was einer Ausbeute von 90,5 % entspricht.

Physikalische Daten:

| Elementaranalyse: | |
|---|---|
| C: gef. 68,0 (ber. 68,1);<br>O: gef. 5,5 (ber. 5,0); | H: gef. 4,9 (ber. 4,8);<br>N: gef. 21,9 (ber. 22,1); |

MS: m/e = 317,0 ($C_{18}H_{15}ON_5^+$);
$^1$H-NMR(DMSO-$d_6$; TMS):
2,72 - 2,73 (d, 1H, NH-C$\underline{H}_3$);
2,80 - 2,82 (d, 2H, NH-C$\underline{H}_3$);
3,73 (s, Wasser); 5,29 (s; breit); 5,41 (s; breit);
6,67 - 6,72 (m, 2H, arom.);
6,94 - 6,97 (d, 0,6H, arom.); 7,49 - 7,52 (d, 1,4H, arom.) ;
7,68 - 7,71 (m, 2H, arom.); 8,0 - 8,1 (m, 0,6H, arom.),
8,25 - 8,37 (m, 1,4H, arom.); 9,91 - 9,94 (q, 1H, N$\underline{H}$-$CH_3$);
11,27 (breit); 12,01 (bewegl. Protonen) ppm;
DC (Merck-Kieselgel 60 $F_{254}$, Aluminiumfolie-Fertigplatten):
$R_f$ (Aceton): 0,8;
$R_f$ (n-Butanol/Eisessig/Wasser Vol. 3:1:1): 0,82;
$R_f$ (Toluol/Eisessig/Essigsäureethylester Vol. 7:1:1): 0,45.

b) Diazotierung und Kupplung

Eine Lösung von 15,9 g (0,05 mol) der in a) erhaltenen Diazokomponente in 100 ml N-Methylpyrrolidon wurde bei Raumtemperatur mit 15 ml konz. Salzsäure versetzt. Nach Abkühlen auf 0 °C wurden 15 ml 23 gew.-%ige Natriumnitritlösung zugetropft.

Nach einstündigem Rühren bei 0 - 5 °C wurden zunächst 0,5 g Amidosulfonsäure und dann 9,5 g (0,055 mol) N-Phenylmethylpyrazolon, gelöst in 100 ml Methanol und 3 ml 30 gew.-%iger Natronlauge, zugegeben. Der pH-Wert wurde bei 4 bis 5 gehalten.

Nachdem keine Diazokomponente mehr detektierbar war (nach 2 h), wurde das Reaktionsgemisch auf Raumtemperatur erwärmt und filtriert.

Der isolierte Niederschlag wurde mit N-Methylpyrrolidon und Wasser gewaschen und bei 80 °C getrocknet.

Es wurden 24,1 g des Zielproduktes als rotes Pulver erhalten, was einer Ausbeute von 96 % entspricht.

| Elementaranalyse: | |
|---|---|
| C: gef. 66,5 (ber. 66,92);<br>O: gef. 6,3 (ber. 6,37); | H: gef. 4,5 (ber. 4,41);<br>N: gef. 22,1 (ber. 22,3). |

Zur Beurteilung der Koloristik wurden 1 g Pigment und 9,5 g einer Einbrennlackmischung aus 70 Gew.-% Kokosalkydharz (60 gew.-%ig in Xylol) und 30 Gew.-% Melaminharz (55 gew.-%ig in Butanol/Xylol) in einem Attritor angerieben, auf Blech aufgetragen, abgelüftet und 30 min bei 120 °C eingebrannt.

Es wurde eine rote Lackierung erhalten.

Beispiel 2 bis 52

Analog Beispiel 1 wurden die in der folgenden Tabelle aufgeführten Isoindolinazopigmente hergestellt (Kupplungs-pH-Wert 3 bis 5) und in das obengenannte Lacksystem eingearbeitet.

Tabelle

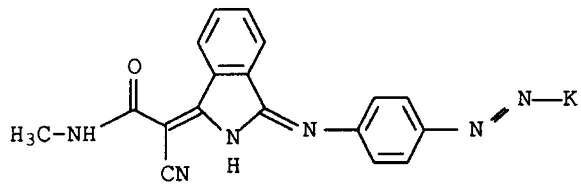

| Bsp. | K | Lackfärbung |
|---|---|---|
| 2 | 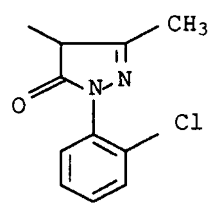 | orangerot |
| 3 | 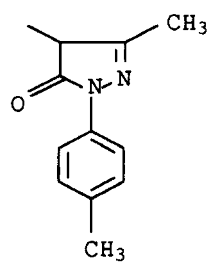 | orangerot |
| 4 | 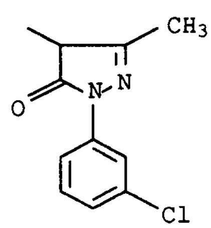 | rot |
| 5 | 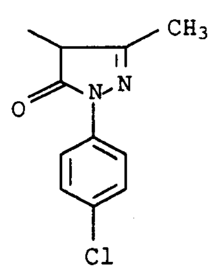 | orangerot |

| Bsp. | K | Lackfärbung |
|---|---|---|
| 6 | 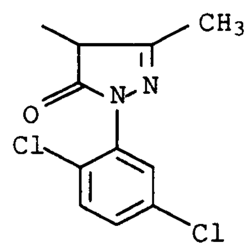 | orange |
| 7 | 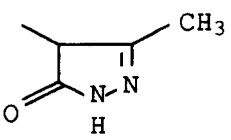 | rotbraun |
| 8 | 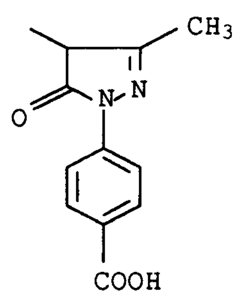 | rotbraun |
| 9 | 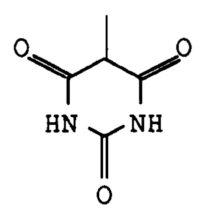 | rotbraun |
| 10 | 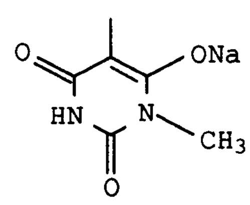 | dunkelrot |

| Bsp. | K | Lackfärbung |
|---|---|---|
| 11 | 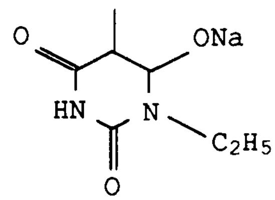 | dunkelrot |
| 12 | 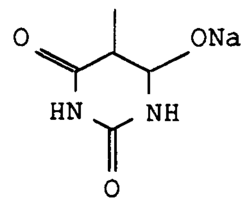 | rot |
| 13 | 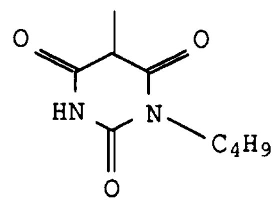 | rot |
| 14 | 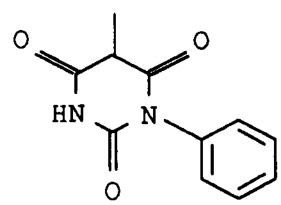 | rot |
| 15 | 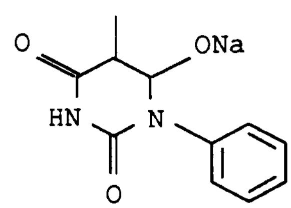 | rot |

| Bsp. | K | Lackfärbung |
|---|---|---|
| 16 | 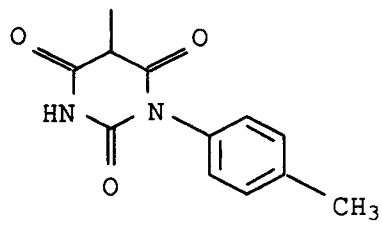 | dunkelrot |
| 17 | 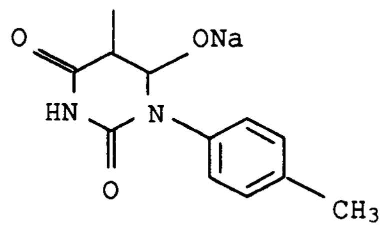 | rot |
| 18 | 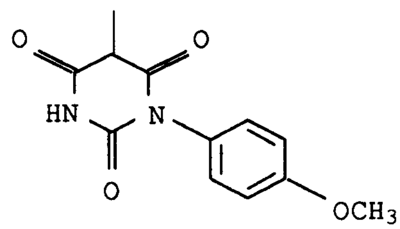 | dunkelrot |
| 19 | 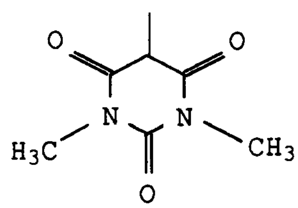 | rot |
| 20 | 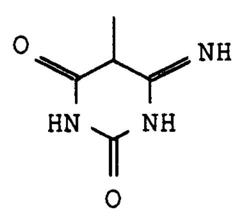 | braun |

| Bsp. | K | Lackfärbung |
|---|---|---|
| 21 | 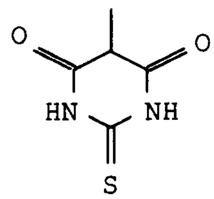 | braun |
| 22 | 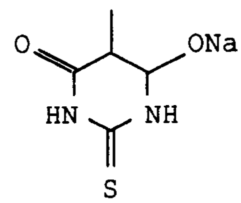 | braun |
| 23 | 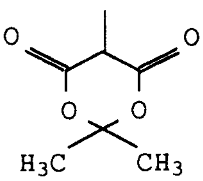 | gelb |
| 24 | 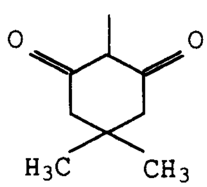 | orange |
| 25 | 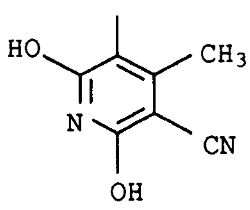 | dunkelgrün |

| Bsp. | K | Lackfärbung |
|---|---|---|
| 26 | 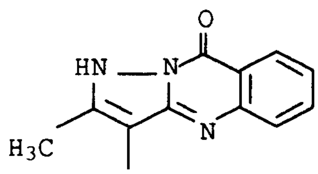 | rötlich dunkelbraun |
| 27 | 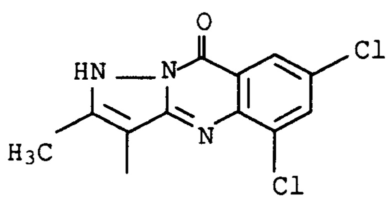 | violett schwarz |
| 28 | 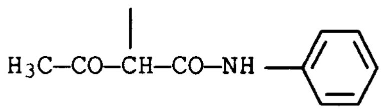 | braun |
| 29 | 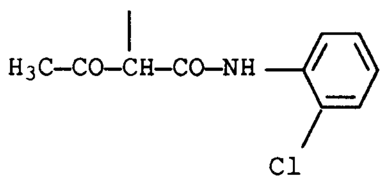 | braun |
| 30 | 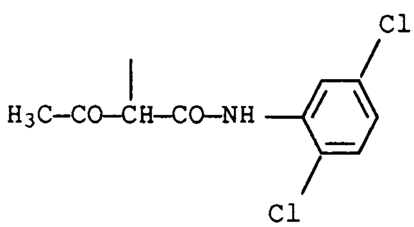 | braun |

| Bsp. | K | Lackfärbung |
|---|---|---|
| 31 | 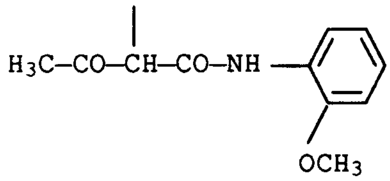 | schwarzrot |
| 32 | 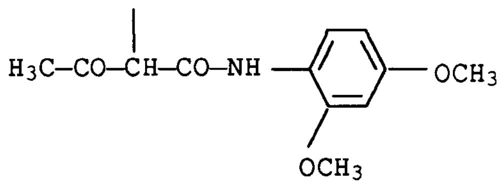 | braun |
| 33 | 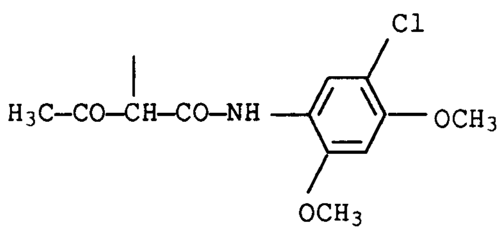 | braun |
| 34 | 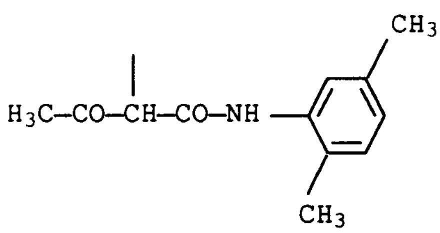 | schwarzrot |
| 35 | 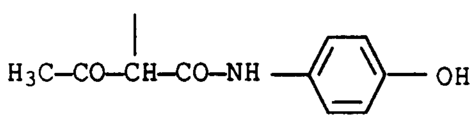 | schwarzrot |

| Bsp. | K | Lackfärbung |
|---|---|---|
| 36 | 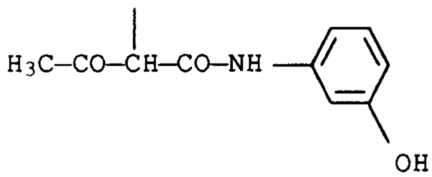 | schwarzrot |
| 37 | 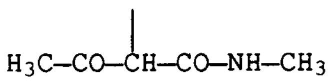 | braun |
| 38 | 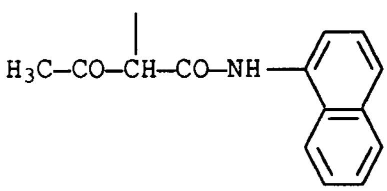 | schwarz-braun |
| 39 | 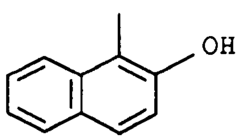 | braun |
| 40 | 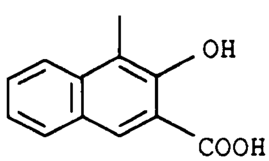 | dunkelbraun |

| Bsp. | K | Lackfärbung |
|---|---|---|
| 41 | 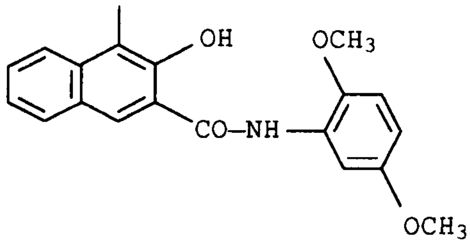 | dunkelbraun |
| 42 | 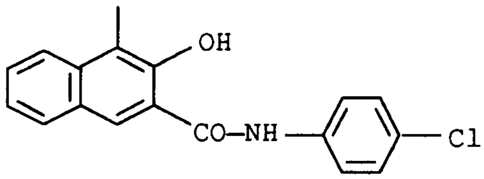 | dunkelbraun |
| 43 | 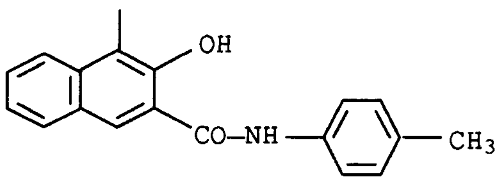 | dunkelbraun |
| 44 | 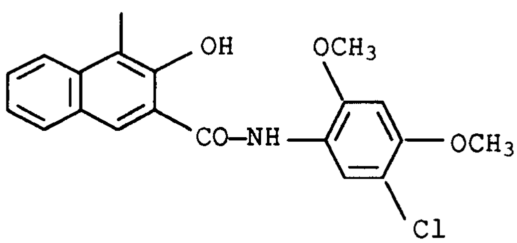 | dunkelbraun |
| 45 | 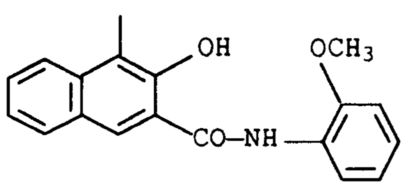 | dunkelbraun |

| Bsp. | K | Lackfärbung |
| --- | --- | --- |
| 46 | 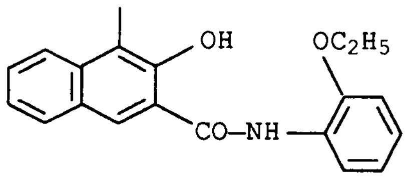 | dunkelbraun |
| 47 | 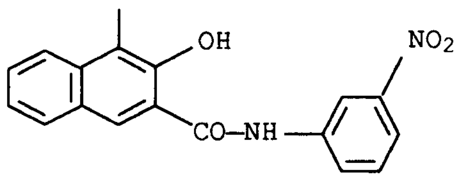 | dunkelbraun |
| 48 | 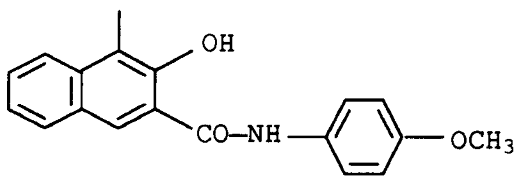 | dunkelbraun |
| 49 | 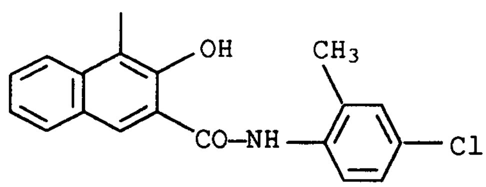 | dunkelbraun |
| 50 | 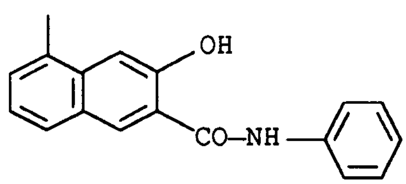 | dunkelbraun |

| Bsp. | K | Lackfärbung |
| --- | --- | --- |
| 51 | 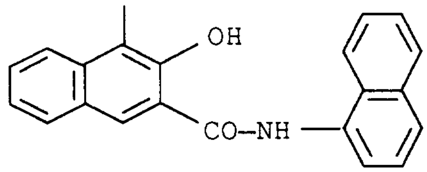 | dunkelbraun |
| 52 | 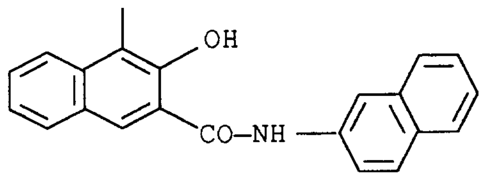 | dunkelbraun |

## Patentansprüche

**1.** Isoindolinazopigmente der allgemeinen Formel I

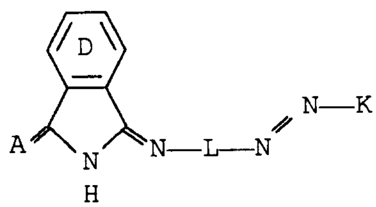

I

in der die Variablen folgende Bedeutung haben:

A einen Rest der Formeln

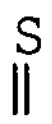, 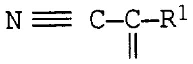, 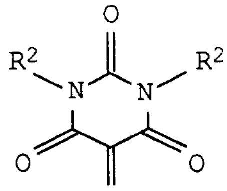, 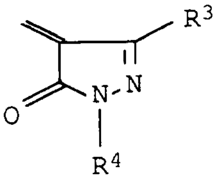,

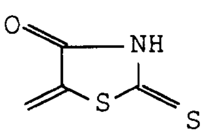, 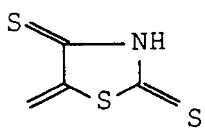, 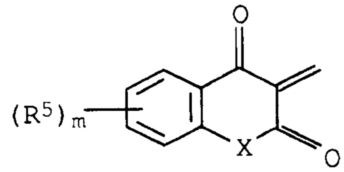,

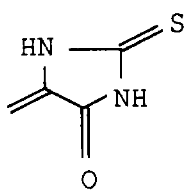, 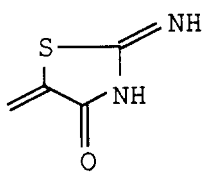, 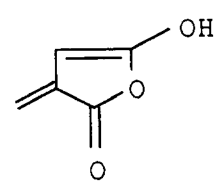,

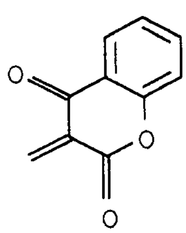, 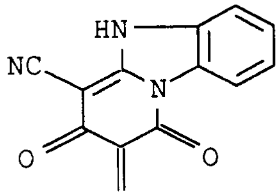, 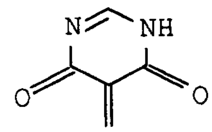,

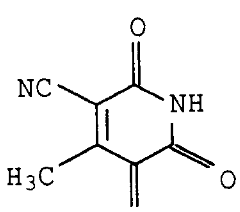 oder 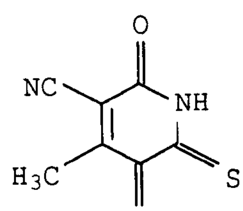

wobei die Variablen folgende Bedeutung haben:

$R^1$ Cyano;

Carbamoyl, das durch

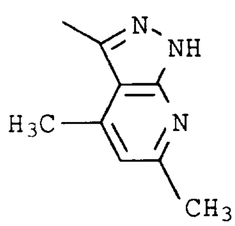

oder 3,3,5,5-Tetramethyl-4-piperidyl, durch $C_1$-$C_{18}$-Alkyl, $C_1$-$C_{10}$-Alkoxycarbonyl, Benzyl, Phenyl oder Naphthyl substituiert sein kann, wobei diese Substituenten ihrerseits durch Halogen, Cyano, Nitro, Sulfo, $C_1$-$C_{10}$-Alkyl, $C_1$-$C_{10}$-Alkoxy, $C_1$-$C_{10}$-Alkylcarbonyl, $C_1$-$C_{10}$-Alkoxycarbonyl, Mono-($C_1$-$C_{10}$-alkyl)amino, Di-($C_1$-$C_{10}$-alkyl)amino, Formylamino, $C_2$-$C_{10}$-Alkanoylamino, Benzoylamino, Aminosulfonyl, Mono- oder Di-($C_1$-$C_{10}$-alkyl)aminosulfonyl, Phenylazo, 3,3,5,5-Tetramethyl-4-piperidyl, Phthalimidyl, Carbamoyl, das ein- oder zweifach durch $C_1$-$C_{10}$-Alkyl substituiert sein kann, und/oder Trifluormethyl substituiert sein können;

$C_1$-$C_{10}$-Alkylcarbonyl, Benzoyl, $C_1$-$C_{10}$-Alkoxycarbonyl, Phenoxycarbonyl oder Benzyloxycarbonyl, wobei Benzoyl, Phenoxy und Benzyloxy durch Halogen, Nitro, Sulfo, $C_1$-$C_{10}$-Alkyl, Formylamino, $C_2$-$C_{10}$-Alkanoylamino und/oder Phthalimidyl substituiert sein können;
Phenyl, das durch Halogen, Cyano, Nitro, Sulfo und/oder Trifluormethyl substituiert sein kann;
Carbazoyl oder Ureidocarbonyl, deren endständige Stickstoffatome ein- oder zweifach durch $C_1$-$C_{10}$-Alkyl oder Benzyl, das die oben genannten Substituenten tragen kann, substituiert sein können;
einen heterocyclischen Rest der Formeln

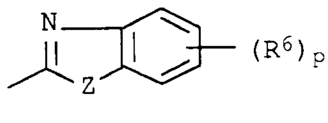,
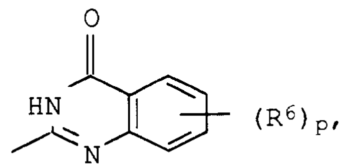,

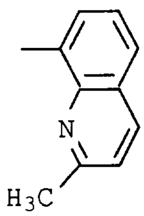 oder 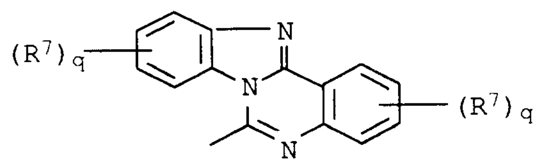

wobei

Z -O-, -S- oder -NH-,
$R^6$ Halogen, Nitro, Sulfo, $C_1$-$C_6$-Alkyl oder $C_1$-$C_6$-Alkoxy,
$R^7$ Halogen,
p 0 bis 2 und
q 1 bis 4
bedeutet;

$R^2$ unabhängig voneinander Wasserstoff, $C_1$-$C_{10}$-Alkyl, Phenyl oder Naphthyl, das jeweils durch Halogen, Nitro, Sulfo, $C_1$-$C_{10}$-Alkyl und/oder $C_1$-$C_{10}$-Alkoxy substituiert sein kann;
$R^3$ $C_1$-$C_{10}$-Alkyl, Amino, Benzoylamino, Carboxy, Carbamoyl oder $C_1$-$C_{10}$-Alkoxycarbonyl;
$R^4$ Wasserstoff oder Phenyl, das bis zu zwei der folgenden Substituenten tragen kann: Halogen, Nitro, Sulfo, Carboxy, Carbamoyl, $C_1$-$C_{10}$-Alkyl, $C_1$-$C_{10}$-Alkoxy oder $C_1$-$C_{10}$-Alkoxycarbonyl;
$R^5$ Halogen oder Nitro;
X -O- oder -$NR^8$-wobei $R^8$ Wasserstoff oder $C_1$-$C_{10}$-Alkyl bedeutet;
m 0 bis 4;
L 1,4-Phenylen, 1,3-Phenylen oder 1,5-Naphthylen, das jeweils folgende Substituenten tragen kann: Halogen, Nitro, Carboxy, Sulfo, Sulfonamido, das ein- oder zweifach durch $C_1$-$C_{10}$-Alkyl substituiert sein kann, $C_1$-$C_{10}$-Alkyl, $C_1$-$C_{10}$-Alkoxy, $C_1$-$C_{10}$-Alkylcarbonyl, $C_1$-$C_{10}$-Alkoxycarbonyl, Formylamino, $C_2$-$C_{10}$-Alkanoylamino und/oder Carbamoyl, das ein- oder zweifach durch $C_1$-$C_{10}$-Alkyl substituiert sein kann;
K den Rest einer Kupplungskomponente der Formel

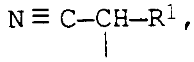

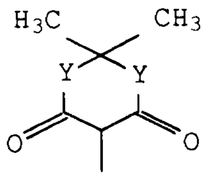

,

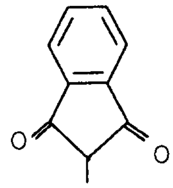

,

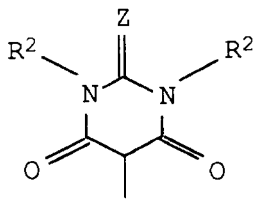

,

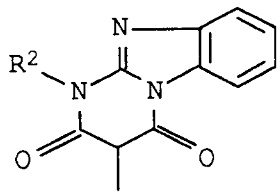

,

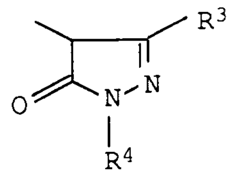

,

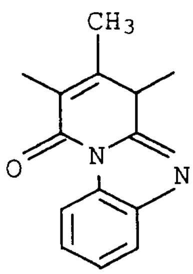

,

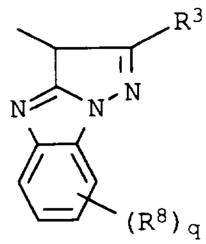

,

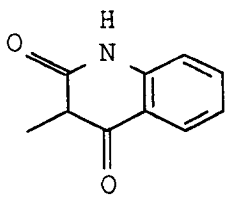

,

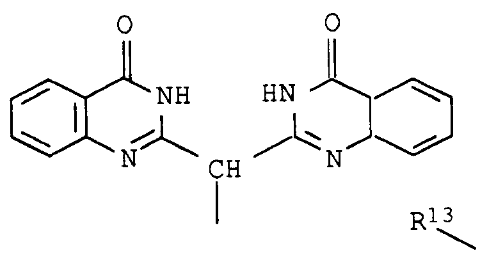

,

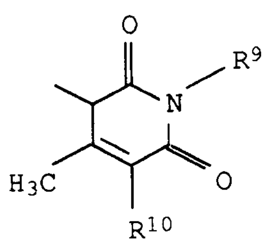

,

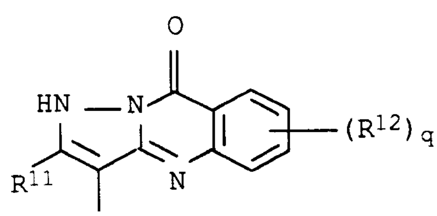

,

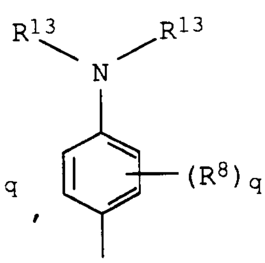

,

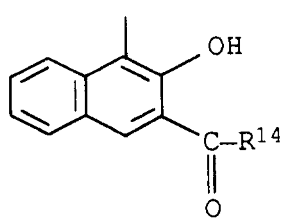

,

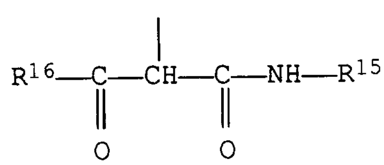

,

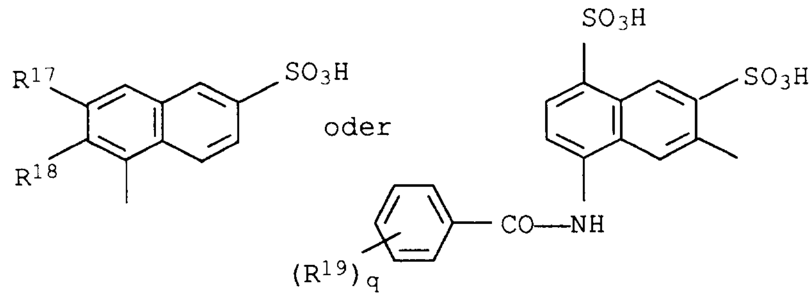

wobei die neuen Variablen folgende Bedeutung haben:

- $R^8$ Wasserstoff, Halogen, Nitro, Sulfo, $C_1$-$C_{10}$-Alkyl, $C_1$-$C_{10}$-Alkoxy, $C_1$-$C_{10}$-Alkoxycarbonyl und/oder Carbamoyl, das ein- oder zweifach durch $C_1$-$C_{10}$-Alkyl substituiert sein kann;
- $R^9$ $C_1$-$C_{10}$-Alkyl, das durch Amino, Mono- oder Di($C_1$-$C_{10}$-alkyl)-amino substituiert sein kann;
- $R^{10}$ Wasserstoff, Halogen, Cyano, Sulfo, $C_1$-$C_{10}$-Alkylcarbonyl, $C_1$-$C_{10}$-Alkoxycarbonyl oder Carbamoyl, das ein- oder zweifach durch $C_1$-$C_{10}$-Alkyl substituiert sein kann;
- $R^{11}$ Methyl oder Phenyl, das folgende Substituenten tragen kann: Halogen, Hydroxy, Nitro, Sulfo, $C_1$-$C_{10}$-Alkyl, $C_1$-$C_{10}$-Alkoxy, $C_1$-$C_{10}$-Alkylcarbonyl, $C_1$-$C_{10}$-Alkoxycarbonyl, Formylamino, $C_2$-$C_{10}$-Alkanoylamino, Carboxy, Carbamoyl, das ein- oder zweifach durch $C_1$-$C_{10}$-Alkyl substituiert sein kann, Mono- oder Di-($C_1$-$C_{10}$-alkyl)- oder -(phenyl)-aminosulfonyl und/oder $C_1$-$C_{10}$-Alkoxy- oder Phenoxysulfonyl;
- $R^{12}$ Wasserstoff, Halogen, Hydroxy, Sulfo, $C_1$-$C_{10}$-Alkyl, $C_1$-$C_{10}$-Alkoxy, $C_1$-$C_{10}$-Alkylcarbonyl, Carbamoyl, das ein- oder zweifach durch $C_1$-$C_{10}$-Alkyl substituiert sein kann, und/oder Mono-($C_1$-$C_{10}$-alkyl)- oder -(phenyl)-aminosulfonyl;
- $R^{13}$ gleiche oder verschiedene Reste: Wasserstoff, $C_1$-$C_{10}$-Alkyl oder $C_1$-$C_{10}$-Alkylcarbonyl;
- $R^{14}$ Hydroxy oder einen Rest der Formel

  $-NH-R^{20}$

  wobei $R^{20}$ Wasserstoff, Phenyl, das die bei dem Rest $R^{10}$ für Phenyl genannten Substituenten tragen kann, oder einen heterocyclischen Rest der Formeln

  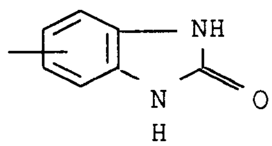 , 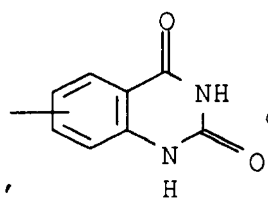 oder 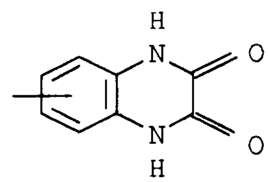

  bedeutet;
- $R^{15}$ Phenyl oder Naphthyl, das jeweils die bei dem Rest $R^{10}$ für Phenyl genannten Substituenten tragen kann, oder einen der bei dem Rest $R^{14}$ genannten heterocyclischen Reste $R^{20}$;
- $R^{16}$ Methyl oder einen Rest der Formel $-NH-R^{15}$;
- $R^{17}$ Wasserstoff oder Sulfo;
- $R^{18}$ Wasserstoff oder Hydroxy;
- $R^{19}$ Halogen;
- Y -O- oder $-CH_2$-;
- Z =O oder =S;

der Benzolring D durch Halogen, Nitro, Carboxy, Carbamoyl, $C_1$-$C_{10}$-Alkyl und/oder $C_1$-$C_{10}$-Alkoxy substituiert sein kann;
wobei die Pigmente in der Azo- oder der Hydrazoform oder in Form eines Gleichgewichtsgemisches zwischen diesen Formen vorliegen können und die enthaltenen verlackbaren Gruppen verlackt sein können.

2. Isoindolinazopigmente der Formel I nach Anspruch 1, in der

A einen Rest der Formel

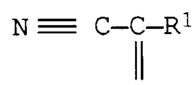

L 1,4-Phenylen und

K einen der Reste der Formeln

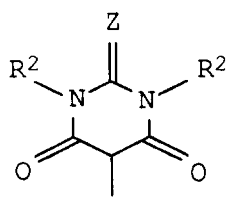

oder

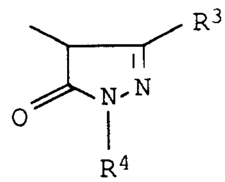

bedeutet.

3. Verfahren zur Herstellung von Isoindolinazopigmenten der Formel I gemäß Anspruch 1, dadurch gekennzeichnet, daß man ein Halbkondensat der Formel II

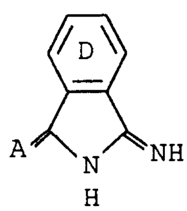

II

mit einem aromatischen Diamin der Formel III

$H_2N—L—NH_2$ III

in einem unter den Reaktionsbedingungen inerten organischen Lösungsmittel umsetzt und das erhaltene Amin der Formel IV

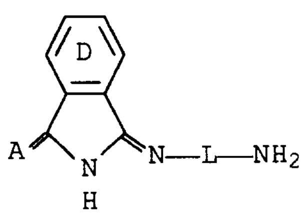

IV

diazotiert und mit einer Kupplungskomponente K-H (V) kuppelt.

4. Verwendung von Isoindolinazopigmenten der Formel I gemäß Anspruch 1 zum Pigmentieren von hochpolymeren organischen Materialien.

Europäisches Patentamt

# EUROPÄISCHER RECHERCHENBERICHT

Nummer der Anmeldung
EP 95 10 3717

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| Y | EP-A-0 190 692 (BASF AG) 13.August 1986<br>* Seite 1, Zeile 16 - Seite 3, Zeile 4 *<br>* Seite 7, Zeile 29 - Seite 8, Zeile 5 *<br>--- | 1-4 | C09B56/00<br>C09B57/04<br>C09D7/12<br>C07D209/44<br>C08K5/3417<br>C09B29/01 |
| Y<br><br><br>D | FR-A-2 424 302 (DAINICHISEIKA COLOR CHEM)<br>23.November 1979<br>* das ganze Dokument *<br>& DE-A-29 01 121<br>--- | 1-4 | |
| A | FR-A-1 537 299 (BAYER) 23.August 1968<br>* Seite 1, linke Spalte, Zeile 1 - Seite 4, rechte Spalte, Zeile 6 *<br>--- | 1-4 | |
| A | CHEMICAL ABSTRACTS, vol. 95, no. 14, 5.Oktober 1981<br>Columbus, Ohio, US;<br>abstract no. 117055z,<br>Seite 80;<br>* Zusammenfassung *<br>& JP-A-56 049 757 (DAINICHISEIKA COLOR AND CHEMICAL MFG CO.) 6.Mai 1981<br>--- | 1-4 | **RECHERCHIERTE SACHGEBIETE (Int.Cl.6)** |
| A | CHEMICAL ABSTRACTS, vol. 98, no. 4, 24.Januar 1983<br>Columbus, Ohio, US;<br>abstract no. 18108z,<br>Seite 74;<br>* Zusammenfassung *<br>& JP-A-57 123 260 (DAINICHISEIKA COLOR AND CHEMICAL MFG CO.) 31.Juli 1982<br>---<br>-/-- | 1-4 | C09B<br>C07D |

Der vorliegende Recherchenbericht wurde für alle Patentansprüche erstellt

| Recherchenort | Abschlußdatum der Recherche | Prüfer |
|---|---|---|
| DEN HAAG | 6.Juli 1995 | Dauksch, H |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

Europäisches Patentamt

# EUROPÄISCHER RECHERCHENBERICHT

Nummer der Anmeldung
EP 95 10 3717

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | CHEMICAL ABSTRACTS, vol. 91, no. 8, 20.August 1979 Columbus, Ohio, US; abstract no. 58690v, Seite 87; * Zusammenfassung * & JP-A-54 030 221 (DAINICHISEIKA COLOR AND CHEMICAL MFG CO.) 6.März 1979 --- | 1-4 | |
| A | EP-A-0 211 272 (DAINICHISEIKA COLOR AND CHEMICAL MFG CO.) 25.Februar 1987 * Zusammenfassung * ----- | 1-4 | |
| | | | RECHERCHIERTE SACHGEBIETE (Int.Cl.6) |

Der vorliegende Recherchenbericht wurde für alle Patentansprüche erstellt

| Recherchenort | Abschlußdatum der Recherche | Prüfer |
|---|---|---|
| DEN HAAG | 6.Juli 1995 | Dauksch, H |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P04C03)